# EUROPEAN PATENT SPECIFICATION

(11) **EP 2 802 785 B1**
(45) Date of publication and mention of the grant of the patent: **28.06.2017**
(21) Application number: 13700817.3
(22) Date of filing: 09.01.2013
(51) Int. Cl.: F16B 5/00, F16B 11/00

(54) **METHOD FOR GLUING A FASTENING ELEMENT ON A CARRIER COMPONENT OF AN AUTOMOBILE**
VERFAHREN ZUM VERKLEBEN EINES BEFESTIGUNGSELEMENTES AN EINEM TRÄGERBAUTEIL EINES KRAFTFAHRZEUGS
PROCÉDÉ DE COLLAGE D'UN ÉLÉMENT DE FIXATION SUR UN ÉLÉMENT DE SUPPORT D'UN VÉHICULE AUTOMOBILE

(30) Priority: 11.01.2012 DE 102012000353
(43) Date of publication of application: 19.11.2014
(73) Proprietor: Illinois Tool Works Inc., Glenview, IL 60025 (US); H.A. Springer Marine + Industrie Service GmbH, 24145 Kiel (DE)
(72) Inventor: KLUGE, Martin, 97285 Röttingen (DE); SOMERS, Floris, 60488 Frankfurt (DE)
(74) Representative: Hauck Patentanwaltspartnerschaft mbB
(86) International application number: PCT/US2013/020722
(87) International publication number: WO 2013/106362

(56) References cited:
- DE-A1- 4 038 989
- DE-A1- 19 941 996
- DE-A1-102008 058 389
- US-A- 4 390 576

## Description

The invention relates to method for gluing a fastening element on a carrier component of an automobile, wherein the fastening element comprises a contact surface for gluing onto the carrier component and at least one fastening section facing away from the contact surface, wherein on the fastening section a component to be fastened on the carrier component can be fastened.

Fastening elements of this kind are glued to bodywork parts of an automobile, for instance. A second component to be fastened to the bodywork can subsequently be fastened to the fastening sections of the fastening elements. For this purpose, the second component comprises fastening sections corresponding to the fastening sections of the fastening elements. The fastening may be achieved by means of a catch mechanism or similar, for example.

The glue for holding the fastening element on the carrier component is usually applied to a contact surface of the fastening element in a fluid state. The fastening element is then placed onto the carrier component. It is necessary in this case for the fastening element to be held against the carrier component until the glue has hardened and is therefore providing its holding force. Depending on the accessibility of the fastening location for the fastening element and the materials to be used, under certain circumstances no additional measures are required to accelerate hardening, for example UV radiation. Hence, for example, UV radiation must be able to penetrate all points to be adhered. This requires a high degree of permeability of the materials used. This constitutes a significant limitation. Accordingly, the fastening element must be held on the carrier element for a comparatively long time until the hardening is sufficiently advanced. This applies particularly in the case of overhead assembly. Prolonged holding of this kind is undesirable, particularly with manual assembly. It has therefore been suggested that the fastening elements should be held on the carrier component for a sufficient period of time by mechanical means. However, this increases assembly costs. Moreover, the provision of mechanical means in locations which are not readily accessible is not always possible or desirable.

From DE 10 2008 058 389 A1 a method for fastening a component on a facade panel of a building facade is known wherein a fastening component comprises a ring-shaped glue layer with which it is glued to the facade panel. In this state a free space is delimited by the glue ring, the surface of the facade panel and an opposite surface of the fastening component. Subsequently, this free space is filled with a liquid adhesive through corresponding filling channels. Such a method is tedious and complex and not suited for gluing fastening elements on carrier components of automobiles in an efficient manner.

From US 4 390 576 A a method is known for gluing a fastening component to a carrier component using an additional mechanical aid. In particular, the fastening component is preliminarily glued to the mechanical aid and preliminarily glued to the carrier component together with the mechanical aid. The mechanical aid comprises adhesive for preliminary holding on the carrier component. After hardening of adhesive applied to the carrier component the mechanical aid is removed from the carrier component and the fastening component wherein the preliminary adhesive between the mechanical aid and the fastening component as well as between the mechanical aid and the carrier component is released. The use of such an additional mechanical aid is tedious and complex and also unsuited for efficient industrial assembly when gluing a fastening element on a carrier component of an automobile.

Based on the most recent background art, as described, the problem addressed by the invention is that of providing a method of the kind indicated above, with which the assembly of fastening elements to carrier components is more easily possible, even in assembly locations which are not readily accessible.

The invention solves this problem by means of the subject-matter of claim 1 . Advantageous embodiments can be found in the dependent claims, the description and the figures.

For a method of the kind mentioned above, the invention solves the problem by the steps
- a contact glue for preliminarily holding the fastening element on the carrier component is applied to a first area of the contact surface,
- a permanent glue for permanently holding the fastening element on the carrier component is applied to a second, different area of the contact surface,
- following application of the contact glue and the permanent glue to the contact surface, the fastening element is placed onto the carrier component with its contact surface,
whereby the contact glue preliminarily holds the fastening element on the carrier component until the permanent glue is hardened and thus permanently holds the fastening element on the carrier component, wherein the contact glue remains on the fastening element. As explained above, fastening elements of this kind may be glued to bodywork parts of an automobile. A contact surface of this kind, with which the fastening element is placed onto the carrier component, is provided on the fastening element for this purpose in each case. For this purpose a permanent glue is applied to an area of the contact surface, said glue permanently holding the fastening element to the carrier component during operation. The fastening element moreover exhibits a fastening section facing away from the contact surface, lying opposite for example. A second component to be fastened to the carrier component having a corresponding fastening section can be fastened to said fastening section. A component of this kind, for example an interior lining part or a bodywork part, is usually secured to a plurality of such fastening elements. The second component correspondingly comprises a plurality of corresponding fastening sections for this purpose. The component to be fastened to the carrier component is fastened to the fastening element or fastening elements once the fastening element or fastening elements has/have been glued to the carrier component. The fastening to the fastening section or fastening sections of the fastening element or fastening elements may be achieved by means of a catch mechanism or similar.

According to the invention, a contact glue is applied to a first area of the contact surface for preliminarily holding the fastening element on the carrier component. The permanent glue for permanently holding the fastening element is then applied particularly subsequently to a second, different area of the contact surface. The contact glue precisely guarantees a preliminary fastening of the fastening element at the prescribed fastening location. Following application of the two glues to the contact surface, the fastening element is pressed onto the carrier component using sufficient defined pressure, so that by means of the contact glue, said fastening element sticks to said carrier component. The gluing forces of the contact glue are not sufficient to hold the fastening element on the carrier component securely during operation. This is the function of the permanent glue, which provides greater adhesive force than the contact glue after hardening. The adhesive forces of the contact glue are sufficient, however, to hold the fastening element securely in the prescribed position on the carrier component while the permanent glue hardens. Other holding measures, for example those of a mechanical nature, are not required. The contact glue remains on the fastening element, even after the final gluing thereof. The main holding forces during subsequent operation are, however, provided by the permanent glue. In this way, simpler assembly of the fastening element is possible according to the invention. Consequently, the fastening element can also be easily assembled overhead, for example, or at places on an automobile body which are not readily accessible and held there. For example, fastening elements according to the invention can be glued to the underside of the automobile or in the wheel housings of an automobile.

The contact glue can be applied to the contact surface in a fluid state and cross-linked or hardened before applying the permanent glue onto the contact surface. In particular, the contact glue may be chemically cross-linked or physically hardened. The cross-linking or hardening may be carried out by radiation, for example by means of ultraviolet radiation (UV radiation), infrared radiation (IR radiation) or heat radiation. Glues offering permanently adhesive contact surfaces, as are typical of adhesive tapes, for example, are referred to as contact glues in this case. After hardening or cross-linking, they may exhibit strengths and holding forces similar to those of typical adhesive tapes. Typical glues of this kind have an acrylate base. Also possible in this respect are glues, for example, which are made from emulsions and harden physically. Two-component glues which are purely chemically cross-linked would also be conceivable.

The permanent glue can also be applied to the contact surface in a fluid state. However, the permanent glue may harden self-actingly in this case. The hardening of the permanent glue may therefore particularly take place without UV radiation or similar auxiliary means. This means that use in assembly locations which are not readily accessible or with materials which are not readily permeable, in which case a separate action to harden, for example UV radiation, would not be possible or only with difficulty, is also possible.

According to a further particularly advantageous embodiment, the contact glue may be applied to the contact surface in a circumferential area, for example a ring-shaped circumferential area, and the permanent glue applied to the contact surface in the area surrounded by the circumferential area, for example the ring-shaped circumferential area. The advantage of this is that the permanent glue, which is usually applied in a fluid state, is limited by the contact glue which has already hardened at this point to the area of the contact surface provided in each case. In order to further improve the delimitation of the respective glue to its area, according to a further embodiment the first area and/or the second area of the contact surface can be formed by a deepening.

According to a further embodiment, the fastening element may be placed onto the carrier component by an automatic handling machine, in other words a robot. The invention permits largely automated assembly. The robot places the fastening element on the carrier component and applies a defined, adequate compressive force, so that the contact glue adheres. At this point in time, the contact glue guarantees an adequate hold by the fastening element on the carrier component, although the permanent glue has not yet hardened. The robot can therefore release the fastening element at this point and assemble the next fastening element. Even the taking up of the fastening element and holding thereof for application of the permanent glue can be performed by the robot. It may transport the fastening element, particularly from a storage site to a station at which the permanent glue is applied, for example. A fully automatic application of the permanent adhesive and gluing of the fastening element to the carrier component is therefore possible. Multiple take-up and multiple assembly of fastening elements is naturally possible with one robot, by means of a turret head, for example.
As has already been explained, the contact glue enables the fastening element to be held on the carrier component during the hardening of the permanent glue simply by the glue effect of the contact glue and the glue effect of the permanent glue, which increases successively during hardening. In particular, no mechanical holding by an assembly robot or the like is necessary during the hardening of the permanent glue. As the permanent glue becomes increasingly hard, it also helps to hold the fastening element on the carrier component.

According to a further embodiment, the application and potential hardening or cross-linking of the contact glue can take place at a manufacturing place of the fastening element. The application of the permanent glue and gluing of the fastening element onto the carrier component can then be carried out at an assembly place different from the manufacturing place. The manufacturing place may be at an automobile components supplier, for example, where the fastening element is produced by plastic injection molding, for example, and the contact glue is applied. Insofar as it is necessary, said contact glue is also hardened at the manufacturing place itself. Subsequently, the fastening element with the hardened contact glue is delivered to the assembly place, for example the production facilities of an automobile manufacturer, where the permanent glue is then applied, particularly fully automatically, and assembly of the fastening element to the carrier component and also the subsequent fastening of the component to be fastened to the carrier component to the fastening element takes place.

When the contact glue is applied to a place other than the assembly place of the fastening element, the areas provided with the contact glue should be suitably protected from dust and dirt, for example by correspondingly dense packing. It is advantageous for areas provided with the contact glue to be provided with a protective cover, for example a siliconized protective paper. Alternatively or in addition, the fastening elements may also be placed with their surfaces exhibiting the contact glue on suitable, for example adhesive-repellent, surfaces, e.g. plastic panels (e.g. made of polyolefins). In this case, the fastening elements may be positioned such that they can be taken up at the assembly place by a robot or a magazine device without additional separation. In both cases the fastening elements easily adhere to the protective paper or to the surfaces with their contact glue and are thereby fixed in a defined manner. The adhesion of the contact glue to the protective paper or to the surface is significantly smaller, however, than the adhesion to the fastening element. Consequently, a practically residue-free separation of the fastening elements with their contact glue from the protective paper or the surface is possible with very little force.

The fastening section can be formed by a fastening ball or a fastening bolt or also a snap-on element. The fastening bolt may exhibit an outer thread, for example. In this way, a non-destructive dismantling of the component is made possible. The component to be fastened to the carrier component then exhibits at least one corresponding fastening section. For example, the fastening sections can be connected to one another by a snap-on connection.

Further, a fastening element for gluing onto a carrier component of an automobile is described, wherein the fastening element comprises a contact surface for gluing onto the carrier component and at least one fastening section facing away from the contact surface, wherein on the fastening section a component to be fastened on the carrier component can be fastened, wherein a contact glue for preliminarily holding the fastening element on the carrier component is applied to a first area of the contact surface, wherein a second, different area of the contact surface remains free for the application of a permanent glue for permanently holding the fastening element on the carrier component.

The fastening element is particularly suitable for implementing the method according to the invention. Accordingly, the method according to the invention can be implemented using the fastening element.

Exemplary embodiments of the invention are explained in greater detail below with the help of figures. These show in schematic form:
- Fig. 1: a fastening element according to the invention according to a first exemplary embodiment as a sectional view,
- Fig. 2: a representation of a first step of the method according to the invention as a sectional view,
- Fig. 3: the representation from Fig. 2 as a perspective view,
- Fig. 4: a representation of a first step of the method according to the invention as a perspective view,
- Fig. 5: a representation of a third step of the method according to the invention as a perspective view,
- Fig. 6: the representation from Fig. 5 as a sectional view,
- Fig. 7: a representation of a fourth step of the method according to the invention as a perspective view,
- Fig. 8: the representation from Fig. 7 as a sectional view, and
- Fig. 9: a fastening element according to the invention according to a second exemplary embodiment as a perspective view.

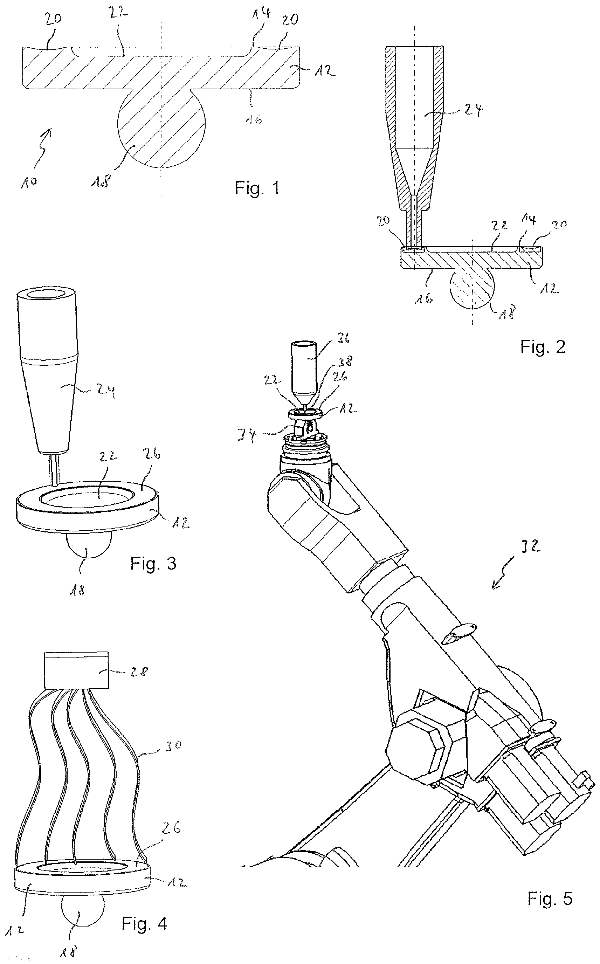

Unless otherwise indicated, the same reference numbers in the figures refer to identical objects. In Fig. 1, a fastening element 10 according to the invention is shown as a sectional view. The fastening element 10 has a disk-shaped basic body 12, the upper side of which forms a contact surface 14. On the opposite underside 16 of the disk-shaped basic body 12 is configured a fastening ball 18 as the fastening section. The contact surface 14 exhibits a first area formed by a ring-shaped circumferential deepening 20 and a second area surrounded by the ring-shaped circumferential deepening 20 formed by a circular deepening 22. In the example shown, the fastening element 10 is produced from a plastics material as a single piece. In particular, it may be produced by a plastic injection-molding process.

As can be seen in Figures 2 and 3, in a first process step according to the invention, a contact glue 26 is first applied to the first area of the contact surface 14 created by the ring-shaped circumferential deepening 20 by means of a glue application device 24 known per se. In the example shown, the contact glue 26 is applied in a fluid state. As can be seen in Fig. 4, the contact glue 26 is subsequently hardened by means of radiation 30 emitted by a radiation source 28, for example UV radiation emitted by a UV radiation source.

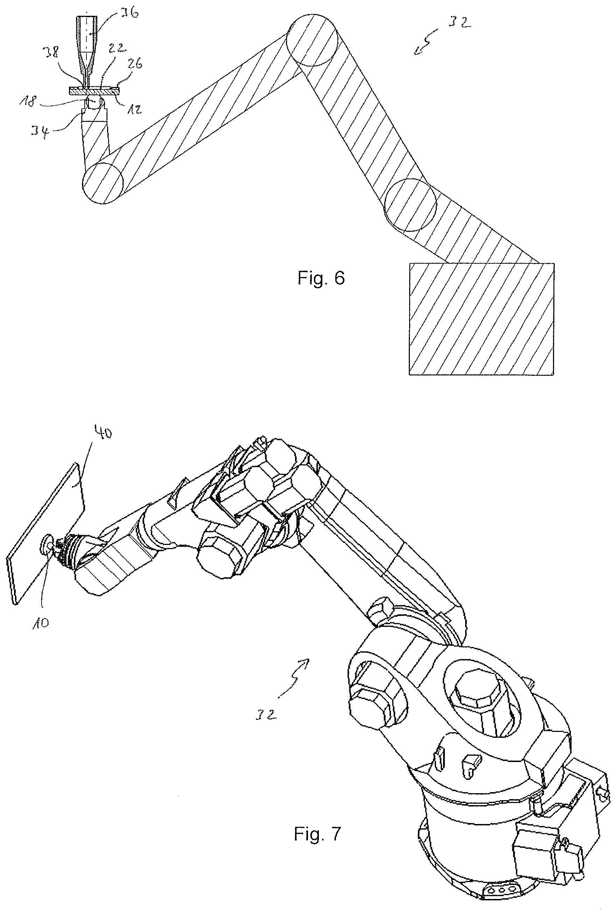

The process steps explained above may for example be carried out at the place where the fastening element 10 is manufactured, for example by means of a plastic injection-molding method. This may for example be a manufacturing place at an automobile components supplier. Fastening elements 10 produced in this manner may be subsequently transported to an assembly place, for example the production facilities of an automobile manufacturer. If necessary, suitable protective measures for the adhesive surfaces may be taken prior to transport to the assembly site.
The next process step which is depicted in Figures 5 and 6 can then be carried out at the assembly site. Reference number 32 generally denotes an automatic handling machine or robot known per se. The robot 32 has a gripping device 34 at the end of its manipulating arm, at which the fastening element 10 with its fastening section 18 is held such that the contact surface 14 is upward facing. The robot 32 has taken up the fastening element 10 from a storage place beforehand. In the position shown in Figures 5 and 6, the robot 32 holds the fastening element 10 beneath a further glue application device 36. By means of this glue application device 36, a permanent glue 38 for permanently holding the fastening element 10 is applied to the carrier component on the second area of the contact surface 14 formed by the circular deepening 22, likewise in a fluid state. Due to the deepening 22 and the ring-shaped delimitation produced by the already hardened contact glue 26, the permanent glue 38, which is still fluid at this point, is held reliably delimited in the second area.

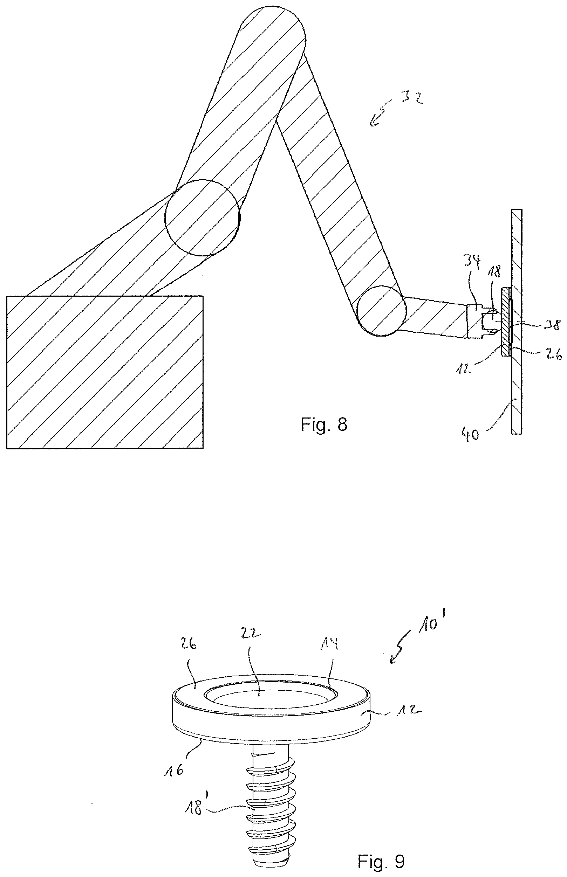

The further process step depicted in Figures 7 and 8 can be carried out subsequently. In this case, the robot 32 places the fastening element 10 with its contact surface 14 on the surface of a carrier component 40 and presses said fastening element using a defined compressive force onto the surface of the carrier component 40. The already hardened contact glue 26 thereby indirectly creates an adhesive action, so that the fastening element 10 is held on the carrier component 40 by the contact glue 26. The gripping device 34 of the robot 32 can therefore by released from the fastening element 10 and the robot 32 can take up a further fastening element 10 to carry out the process steps shown in Figures 5 to 8.

In the state of the fastening element 10 held by the contact glue 26 securely in the prescribed position on the carrier component 40, the permanent glue 38 can then harden without further holding measures, of a mechanical nature for example, being necessary. As the hardening increases, the permanent glue also helps to hold the fastening element 10 on the carrier component 40. When the permanent glue 38 is completely hardened, it transmits a significantly greater holding action than the contact glue 26.

The carrier component 40 may be a bodywork part of an automobile, for example. A plurality of fixing elements 10 according to the invention is secured to the carrier component 40 in the manner described above. A component to be fastened to the carrier component 40, for example an internal lining or protective part, can be fastened to the fastening elements 10 and therefore to the carrier component 40 subsequently. For this purpose, this component exhibits fastening sections corresponding to the fastening sections 18 of the fastening elements 10, said fastening sections being capable of being used for fastening to the fastening sections 18 by means of a snap-on connection, for example. The assembly of the fastening element 10 according to the invention is therefore significantly simplified. At the same time, very high holding forces are achieved by the permanent glue 38 during operation.

Fig. 9 shows a second exemplary embodiment of a fastening element 10' according to the invention. This fastening element 10' largely corresponds in terms of its design and function and therefore in relation to the process steps explained above to the fastening element 10 according to the first exemplary embodiment shown in Fig. 1. Unlike the fastening element 10 from Fig. 1, the fastening element 10' from Fig. 9 as a fastening section exhibits no fastening balls 18, however, but a fastening bolt 18' with an outer thread, which extends coaxially to the disk-shaped basic body 12 starting from the underside 16 of the disk-shaped basic body 12 opposite the contact surface 14. Insofar as fastening elements 10' of this kind have been glued to the carrier component 40 in the manner described above, a component to be fastened to the carrier component 40 may in turn be fastened to the fastening sections corresponding to the fastening sections 18'. The outer thread of the threaded bolt 18' permits non-destructive dismantling in a simple manner.

## Claims

1. Method for gluing a fastening element (10, 10') on a carrier component (40) of an automobile, wherein the fastening element (10, 10') comprises a contact surface (14) for gluing onto the carrier component (40) and at least one fastening section (18, 18') facing away from the contact surface (14), wherein on the fastening section a component to be fastened on the carrier component (40) can be fastened, comprising the steps:
- a contact glue (26) for preliminarily holding the fastening element (10, 10') on the carrier component (40) is applied to a first area (20) of the contact surface (14),
- a permanent glue (38) for permanently holding the fastening element (10, 10') on the carrier component (40) is applied to a second, different area (22) of the contact surface (14),
- following application of the contact glue (26) and the permanent glue (38) to the contact surface, the fastening element (10, 10') is placed onto the carrier component (40) with its contact surface (14), whereby the contact glue (26) preliminarily holds the fastening element (10, 10') on the carrier component (40) until the permanent glue (38) is hardened and thus permanently holds the fastening element (10, 10') on the carrier component (40), wherein the contact glue remains on the fastening element (10, 10').

2. Method according to claim 1, **characterized in that** the contact glue (26) is applied to the contact surface (14) in a fluid state and is cross-linked before applying the permanent glue (38) onto the contact surface (14).

3. Method according to claim 2, **characterized in that** the hardening is carried out by radiation, in particular by UV radiation.

4. Method according to one of the preceding claims, **characterized in that** the permanent glue (38) is applied to the contact surface (14) in a fluid state.

5. Method according to one of the preceding claims, **characterized in that** the permanent glue hardens self-actingly.

6. Method according to one of the preceding claims, **characterized in that** the contact glue (26) is applied to the contact surface (14) in a circumferential area (20) and the permanent glue (38) is applied to the contact surface (14) in an area (22) surrounded by the circumferential area (20).

7. Method according to one of the preceding claims, **characterized in that** the first area (20) and/or the second area (22) of the contact surface (14) are formed by a deepening (20, 22).

8. Method according to one of the preceding claims, **characterized in that** the fastening element (10, 10') is placed onto the carrier component (40) by a robot.

9. Method according to one of the preceding claims, **characterized in that** during hardening of the permanent glue (38) the fastening element (10, 10') is held on the carrier component (40) only by the glue effect of the contact glue (26) and the glue effect of the permanent glue (38) as it increases with its hardening.

10. Method according to one of the preceding claims, **characterized in that** the application and potentially hardening of the contact glue (26) is carried out at a manufacturing place of the fastening element (10, 10'), and **in that** the application of the permanent glue (38) and the gluing of the fastening element (10, 10') onto the carrier component (40) is carried out at an assembly place, different from the manufacturing place.

11. Method according to one of the preceding claims, **characterized in that** the fastening section (18, 18') is formed by a fastening ball (18) or a fastening bolt (18').

## Patentansprüche

1. Verfahren zum Aufkleben eines Befestigungselements (10, 10') auf ein Trägerbauteil (40) eines Automobils, wobei das Befestigungselement (10, 10') eine Kontaktfläche (14) zum Aufkleben auf das Trägerbauteil (40) und mindestens einen der Kontaktfläche (14) abgewandten Befestigungsabschnitt (18, 18') aufweist, an dem ein an dem Trägerbauteil (40) zu befestigendes Bauteil befestigbar ist, **gekennzeichnet durch** die Schritte:
- auf einen ersten Bereich (20) der Kontaktfläche (14) wird ein Kontaktklebemittel (26) zum vorläufigen Halten des Befestigungselements (10, 10') an dem Trägerbauteil (40) aufgebracht,
- auf einen zweiten, anderen Bereich (22) der Kontaktfläche (14) wird ein dauerhaftes Klebemittel (38) zum dauerhaften Halten des Befestigungselements (10, 10') an dem Trägerbauteil (40) aufgebracht,
- nach dem Aufbringen des Kontaktklebemittels (26) und des dauerhaften Klebemittels (38) auf die Kontaktfläche wird das Befestigungselement (10, 10') mit seiner Kontaktfläche (14) auf das Trägerbauteil (40) aufgesetzt, wobei das Kontaktklebemittel (26) das Befestigungselement (10, 10') vorläufig an dem Trägerbauteil (40) hält bis das dauerhafte Klebemittel (38) ausgehärtet ist und so das Befestigungselement (10, 10') dauerhaft an dem Trägerbauteil (40) hält, wobei das Kontaktklebemittel auf dem Befestigungselement (10, 10') verbleibt.

2. Verfahren nach Anspruch 1, **dadurch gekennzeichnet, dass** das Kontaktklebemittel (26) in flüssigem Zustand auf die Kontaktfläche (14) aufgebracht und vor dem Aufbringen des dauerhaften Klebemittels (38) auf die Kontaktfläche (14) vernetzt wird.

3. Verfahren nach Anspruch 2, **dadurch gekennzeichnet, dass** das Aushärten mittels Bestrahlung, insbesondere mittels UV-Bestrahlung, erfolgt.

4. Verfahren nach einem der vorhergehenden Ansprüche, **dadurch gekennzeichnet, dass** das dauerhafte Klebemittel (38) in flüssigem Zustand auf die Kontaktfläche (14) aufgebracht wird.

5. Verfahren nach einem der vorhergehenden Ansprüche, **dadurch gekennzeichnet, dass** das dauerhafte Klebemittel selbsttätig aushärtet.

6. Verfahren nach einem der vorhergehenden Ansprüche, **dadurch gekennzeichnet, dass** das Kontaktklebemittel (26) in einem umlaufenden Bereich (20) auf die Kontaktfläche (14) aufgebracht wird und das dauerhafte Klebemittel (38) in einem von dem umlaufenden Bereich (20) umschlossenen Bereich (22) auf die Kontaktfläche (14) aufgebracht wird.

7. Verfahren nach einem der vorhergehenden Ansprüche, **dadurch gekennzeichnet, dass** der erste Bereich (20) und/oder der zweite Bereich (22) der Kontaktfläche (14) durch eine Vertiefung (20, 22) gebildet sind.

8. Verfahren nach einem der vorhergehenden Ansprüche, **dadurch gekennzeichnet, dass** das Befestigungselement (10, 10') durch einen Handhabungsautomaten auf das Trägerbauteil (40) aufgesetzt wird.

9. Verfahren nach einem der vorhergehenden Ansprüche, **dadurch gekennzeichnet, dass** das Befestigungselement (10, 10') während des Aushärtens des dauerhaften Klebemittels (38) nur durch die Klebewirkung des Kontaktklebemittels (26) und die mit dem Aushärten zunehmende Klebewirkung des dauerhaften Klebemittels (38) an dem Trägerbauteil (40) gehalten wird.

10. Verfahren nach einem der vorhergehenden Ansprüche, **dadurch gekennzeichnet, dass** das Aufbringen und gegebenenfalls Aushärten des Kontaktklebemittels (26) an einem Herstellort des Befestigungselements (10, 10') erfolgt und, dass das Aufbringen des dauerhaften Klebemittels (38) und das Aufkleben des Befestigungselements (10, 10') auf das Trägerbauteil (40) an einem von dem Herstellort unterschiedlichen Montageort erfolgt.

11. Verfahren nach einem der vorhergehenden Ansprüche, **dadurch gekennzeichnet, dass** der Befestigungsabschnitt (18, 18') durch eine Befestigungskugel (18) oder einen Befestigungsbolzen (18') gebildet ist.

## Revendications

1. Procédé de collage d'un élément de fixation (10, 10') sur un composant porteur (40) d'une automobile, dans lequel l'élément de fixation (10, 10') comprend une surface de contact (14) pour le collage sur le composant porteur (40) et au moins une section de fixation (18, 18') à l'opposé de la surface de contact (14), dans lequel on peut fixer sur la section de fixation un composant à fixer sur le composant porteur (40), comprenant les étapes suivantes :
- on applique, pour un maintien préliminaire de l'élément de fixation (10, 10') sur le composant porteur (40), un adhésif de contact (26) à une première zone (20) de la surface de contact (14),
- on applique, pour un maintien permanent de l'élément de fixation (10, 10') sur le composant porteur (40), un adhésif permanent (38) à une seconde zone (22) différente de la surface de contact (14),
- suite à l'application de l'adhésif de contact (26) et de l'adhésif permanent (38) à la surface de contact, on place l'élément de fixation (10, 10') avec sa surface de contact (14) sur le composant porteur (40), moyennant quoi l'adhésif de contact (26) assure un maintien préliminaire de l'élément de fixation (10, 10') sur le composant porteur (40) jusqu'à ce que l'adhésif permanent (38) durcisse et ainsi maintienne de façon permanente l'élément de fixation (10, 10') sur le composant porteur (40), dans lequel l'adhésif de contact reste sur l'élément de fixation (10, 10').

2. Procédé selon la revendication 1, **caractérisé en ce que** l'adhésif de contact (26) est appliqué à la surface de contact (14) à l'état fluide et est réticulé avant l'application de l'adhésif permanent (38) sur la surface de contact (14).

3. Procédé selon la revendication 2, **caractérisé en ce que** le durcissement s'effectue par rayonnement, en particulier par rayonnement ultraviolet.

4. Procédé selon l'une quelconque des revendications précédentes, **caractérisé en ce que** l'adhésif permanent (38) est appliqué à la surface de contact (14) à l'état fluide.

5. Procédé selon l'une quelconque des revendications précédentes, **caractérisé en ce que** l'adhésif permanent durcit automatiquement.

6. Procédé selon l'une quelconque des revendications précédentes, **caractérisé en ce que** on applique l'adhésif de contact (26) à la surface de contact (14) dans une zone périphérique (20) et on applique l'adhésif permanent (38) à la surface de contact (14) dans une zone (22) entourée par la zone périphérique (20).

7. Procédé selon l'une quelconque des revendications précédentes, **caractérisé en ce que** la première zone (20) et/ou la seconde zone (22) de la surface de contact (14) sont formées par un approfondissement (20, 22).

8. Procédé selon l'une quelconque des revendications précédentes, **caractérisé en ce que** l'élément de fixation (10, 10') est placé sur le composant porteur (40) par un robot.

9. Procédé selon l'une quelconque des revendications précédentes, **caractérisé en ce que** pendant le durcissement de l'adhésif permanent (38) l'élément de fixation (10, 10') n'est maintenu sur le composant porteur (40) que par l'effet collant de l'adhésif de contact (26) et l'effet collant de l'adhésif permanent (38) au fur et à mesure qu'il augmente avec son durcissement.

10. Procédé selon l'une quelconque des revendications précédentes, **caractérisé en ce que** l'application et éventuellement le durcissement de l'adhésif de contact (26) s'effectue au lieu de fabrication de l'élément de fixation (10, 10'), et **en ce que** l'application de l'adhésif permanent (38) et le collage de l'élément de fixation (10, 10') sur le composant porteur (40) s'effectue au lieu d'assemblage, différent du lieu de fabrication.

11. Procédé selon l'une quelconque des revendications précédentes, **caractérisé en ce que** la section de fixation (18, 18') est constituée par une boule de fixation (18) ou un boulon de fixation (18').
